# EUROPEAN PATENT SPECIFICATION

(11) **EP 2 265 434 B1**
(45) Date of publication and mention of the grant of the patent: **03.10.2012**
(21) Application number: 09736001.0
(22) Date of filing: 23.04.2009
(51) Int. Cl.: B29D 30/30, B29D 30/46

(54) **Device for manufacturing a pre-assembly for a tyre**
Vorrichtung zur Herstellung einer Vorbaugruppe für einen Reifen
Dispositif de fabrication d'un pré-ensemble pour un pneumatique

(30) Priority: 23.04.2008 NL 2001510; 02.06.2008 US 130663 P
(43) Date of publication of application: 29.12.2010
(73) Proprietor: VMI Holland B.V., 8161 RK Epe (NL)
(72) Inventor: MULDER, Gerrit, NL-8167 NS Oene (NL); SLOTS, Antonie, NL-8111 RS Heeten (NL)
(74) Representative: Peters, Sebastian Martinus
(86) International application number: PCT/NL2009/050217
(87) International publication number: WO 2009/131451

(56) References cited:
- EP-A- 0 246 497
- EP-A- 0 557 012
- EP-A- 0 561 374
- EP-A- 0 561 609
- EP-A- 0 744 278
- EP-A- 1 197 317
- US-A- 4 875 959
- US-A- 6 105 648

## Description

### BACKGROUND OF THE INVENTION

The invention relates to a device for manufacturing a pre-assembly for a tyre, which device is provided with a building drum for receiving the pre-assembly, with an inner liner stock roll for containing an inner liner, with a first side wall stock roll for containing a first side wall and a second side wall stock roll for containing a second side wall, with a joining device for joining the inner liner and the side walls together into a pre-assembly, wherein in the pre-assembly the first and second side walls are situated on either side of the inner liner, which joining device is provided with a cutting device for cutting the pre-assembly to length and with a supply conveyor for conveying the cut pre-assembly to the building drum.

Such a device for manufacturing a pre-assembly for a tyre is among others known from EP-A2-0 744 278. In said device the pre-assembly is cut to a length corresponding with the circumference of the building drum, wherein it is desirable that the leading end of the cut pre-assembly and the trailing end of the cut pre-assembly come to abut each other fittingly without a gap or overlap in order for a proper splice to be formed between them. As the inner liner and the side walls are made of different materials, and due to winding the materials onto the stock rolls different tensions are present in the materials, differences in length often occur after cutting the material. As a result it often happens that the leading and the trailing end lie at different distances from each other on the building drum. An operator then ensures manually that the leading and trailing end come to abut each other correctly. Not only does said manual correction take time, it cannot always take place reproducibly either.

### SUMMARY OF THE INVENTION

It is an object of the present invention to provide a device for manufacturing a pre-assembly for a tyre as defined in claim 1, with which the manual correction is no longer necessary, which results in the time needed for manufacturing a tyre being shortened, and as a result of which tyres can be manufactured in a more reproducible manner. For that purpose according to the invention a device of the type mentioned in the preamble is further characterised in that the device is provided with a first side wall measuring device for measuring the length of the first side wall of the cut pre-assembly and for giving a first side wall measuring signal indicative of the measured length of the first side wall, with a second side wall measuring device for measuring the length of the second side wall of the cut pre-assembly and for giving a second side wall measuring signal indicative of the measured length of the second side wall, and with an inner liner measuring device for measuring the length of the inner liner of the cut pre-assembly and for giving an inner liner measuring signal indicative of the measured length of the inner liner. Because the device for manufacturing a pre-assembly for a tyre is provided with a first and second side wall measuring device and an inner liner measuring device the differences in length between the side walls and the inner liner can be measured, as a result of which the correction of the differences in length can take place more accurately and reproducibly. In one embodiment the device furthermore comprises a correction device for correcting differences in length on the basis of the first side wall measuring signal, the second side wall measuring signal and/or the inner liner measuring signal. Preferred embodiments of the invention are defined in the dependent claims.

In one embodiment of a device according to the invention the correction device is furthermore provided with a pressure roll for pressing the cut pre-assembly against the building drum, wherein the pressure roll is provided with a non-rotatable shaft extending in a longitudinal direction of the pressure roll, a plurality of uniformly spaced apart radial discs on the shaft, wherein each disc comprises an internal part that is individually slidably supported on the shaft for radial movement with respect to the building drum, and an external ring surrounding the internal part and rotatably supported on the internal part, wherein the internal part has a recess the length of which exceeds the corresponding size of the shaft, wherein the recess has side walls that slidably engage onto the side walls of the shaft for movement in a radial direction with respect to the building drum, wherein the shaft comprises a plurality of radial bores, one for each disc, a piston arranged in the internal part of each disc, which piston slidably engages into a respective radial bore of the shaft, wherein the shaft has ducts that are connected to respective bores for supplying a pressure medium thereto from a pressure supplying device so that each disc is radially movable on the shaft while operating the respective piston in the respective bore in the shaft, wherein the plurality of discs comprises a first side wall disc group for pressing the first side wall against the building drum, a second side wall disc group for pressing the second side wall against the building drum, and an inner liner disc group for pressing the inner liner against the building drum. Such a pressure roll is known per se from US-A-6.105.648. The use of said pressure roll makes it possible to carry out the correction of the differences in length automatically, that means without manual intervention. Particularly when the pressure supplying device contains a control device for depending on the first side wall measuring signal, the second side wall measuring signal and/or the inner liner measuring signal applying a pressure in question onto the disc group in question, a quick, reproducible automatic correction is possible. After extensive research it has namely turned out that a difference in length after cutting can be corrected by applying a pressure difference onto the cut pre-assembly when it is wound onto the building drum. When for instance one of the side walls is shorter than the inner liner, a larger pressure exerted by the pressure roll onto said side wall while the latter is being wound onto the building drum ensures that said side wall is extended. By comparison by experiment the pressure difference necessary for a certain length correction can easily be determined per material. The pressure roll may alternatively be designed such that the bores of the discs belonging to one group have been combined into one common chamber.

An extremely accurate winding of a pre-assembly, having a leading end and a trailing end, onto a building drum is achieved in one embodiment of a device according to the invention wherein the device is provided with a first retaining device for retaining the leading end on the building drum during winding the pre-assembly onto the building drum. An optimal accuracy can be achieved when the device is also provided with a second retaining device for retaining the trailing end on the supply conveyor during winding the pre-assembly onto the building drum. In this way the leading and trailing ends of the pre-assembly are at all times retained in a fixed position when being wound onto the building drum, as a result of which the winding of the pre-assembly onto the building drum takes place highly accurately, so that manual correction of differences in length will hardly ever or may even never be necessary any more. This aspect of retaining the leading and trailing ends may also be applied independently of the use of the measuring device, and forms an individual aspect of the invention.

In one embodiment of a device according to the invention the first retaining device comprises an elongated clamping element, which clamping element at the extreme ends is provided with magnets and between the extreme ends comprises a surface of flexible material, which clamping element due to a clamping element holder can be placed on the building drum during rotation of the building drum, and due to the magnets is detachably arranged on the building drum, wherein the clamping element holder is also adapted for during rotation of the building drum removing the clamping element from the building drum. It will be clear that in an alternative embodiment the building drum is provided with magnets for detachably holding the clamping element.

Alternatively the first retaining device may be a vacuum device integrated in the building drum.

In actual practice it has turned out that the tensions in the material make the material slightly change shape immediately after cutting the material. In order to ensure that this change of shape occurs to a lesser extent or even not at all, in one embodiment of a device according to the invention the device is provided with a vacuum device which is situated underneath at least the part of the supply conveyor situated underneath the cutting device and in conveyance direction up to some distance therefrom, wherein the vacuum device is suitable for retaining the pre-assembly on the supply conveyor. It has turned out to be advantageous to provide the supply conveyor with through-holes for the vacuum generated by the vacuum device to retain the material against the supply conveyor. This and optionally other vacuum devices advantageously extend over the full width and length of the supply conveyor.

In order to ensure that during conveying the material does not change shape or as little as possible, particularly to prevent shrinking of the material, in one embodiment of a device according to the invention the surface of the supply conveyor is made of material that adheres to the material of the pre-assembly.

It is advantageous when the supply conveyor comprises a first conveyor which is placed underneath the cutting device, and a second conveyor which is placed between the first conveyor and the building drum. As a result the winding of the cut pre-assembly onto the building drum can take place independent of supplying and cutting the pre-assembly, and it is even possible that the building drum remains rotating continuously.

### SHORT DESCRIPTION OF THE DRAWINGS

The invention will be elucidated on the basis of a number of exemplary embodiments shown in the attached drawings, in which:
Figure 1 shows a schematic view in perspective of a known device for manufacturing a pre-assembly for a tyre;
Figure 2 shows a schematic side view of an inventive device for manufacturing a pre-assembly for a tyre;
Figure 3 shows a top view of the device shown in figure 2;
Figure 4 shows a schematic front view of an embodiment of a retaining device with clamping element holder and clamping element to be used in the inventive device;
Figures 5A-5E show in schematic side view some positions of the clamping element according to figure 4 on the building drum during rotation of the building drum;
Figure 6 shows a schematic front view of another embodiment of a retaining device with clamping element holder and clamping element to be used in the inventive device;
Figure 7A-7D show in schematic side view some positions of the clamping element according to figure 6 on the building drum during rotation of the building drum;
Figure 8 shows in schematic front view the pressure roll to be used in the device according to figure 2; and
Figure 9 schematically shows the shaft of the pressure roll shown in figure 8 with the different zones.

### DETAILED DESCRIPTION OF THE DRAWINGS

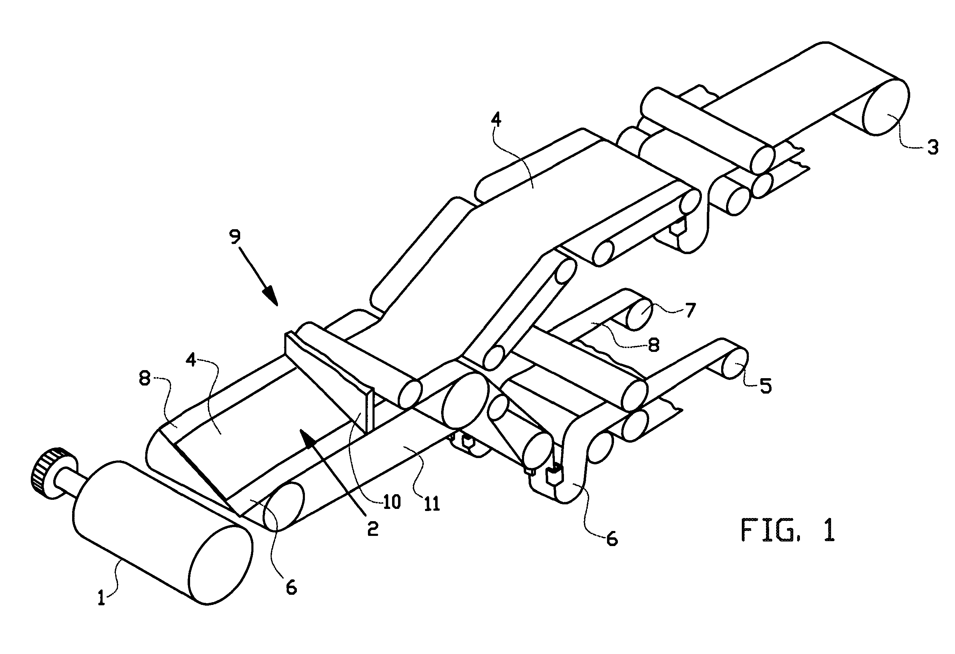

Figure 1 shows a schematic view in perspective of a device known from EP-A2-0 744 278 for manufacturing a pre-assembly for a tyre. The device is provided with a building drum 1 for receiving the pre-assembly 2. The device further comprises an inner liner stock roll 3 for containing an inner liner 4. The device further comprises a first side wall stock roll 5 for containing a first side wall 6 and a second side wall stock roll 7 for containing a second side wall 8.

The known device further comprises a joining device 9 for joining the inner liner 4 and the side walls 6, 8 together into a pre-assembly, wherein in the pre-assembly 2 the first and second side walls 6, 8 are situated on either side of the inner liner 4. The joining device 9 is provided with a cutting device 10, for instance an ultrasonic cutting device or a cutting device with a rotating blade, for cutting the pre-assembly 2 to length and with a supply conveyor 11 for conveying the cut pre-assembly 2 to the building drum 1.

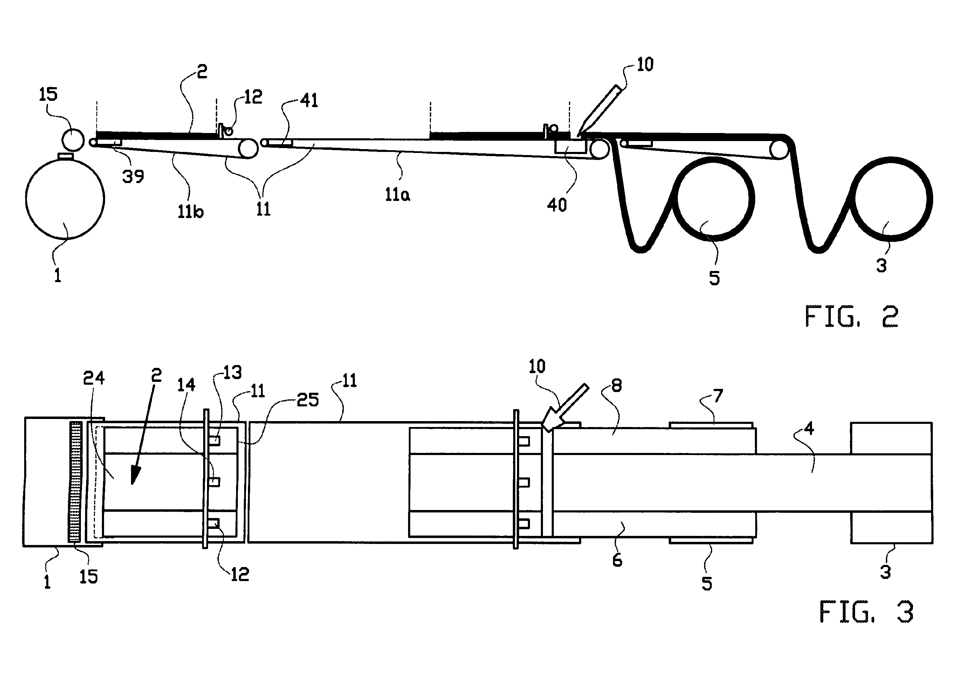

In figure 2 a schematic side view and in figure 3 a schematic top view is shown of an inventive device for manufacturing a pre-assembly for a tyre. The inventive device is provided with a first side wall measuring device 12 for measuring the length of the first cut side wall 6 of the cut pre-assembly 2 and for giving a first side wall measuring signal indicative of the measured length of the first side wall 6, with a second side wall measuring device 13 for measuring the length of the second cut side wall 8 of the cut pre-assembly 2 and for giving a second side wall measuring signal indicative of the measured length of the second side wall 8, and with an inner liner measuring device 14 for measuring the length of the cut inner liner 4 of the cut pre-assembly 2 and for giving an inner liner measuring signal indicative of the measured length of the inner liner 4.

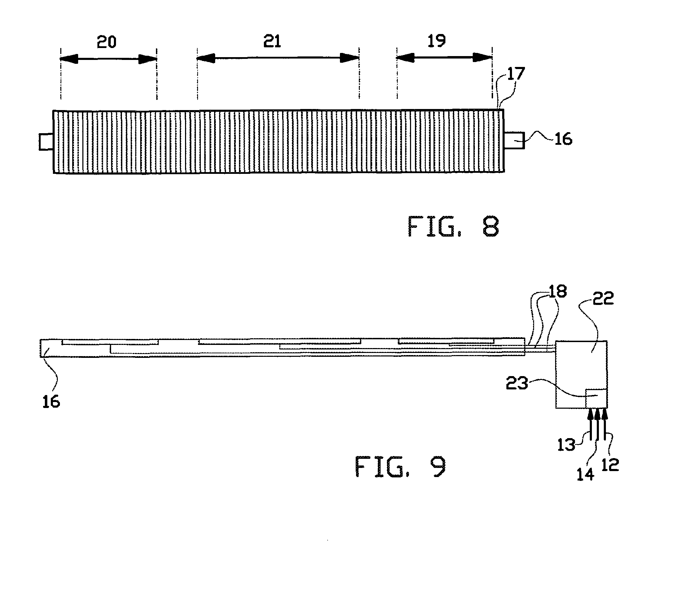

The inventive device is furthermore provided with a pressure roll 15 (also see figures 8 and 9) for pressing the cut pre-assembly 2 against the building drum 1. The pressure roll 15 is of the type as for instance described in US-A-6.105.648, and is provided with a non-rotatable shaft 16, extending in a longitudinal direction of the pressure roll 15. The pressure roll 15 further comprises a plurality of uniformly spaced apart radial disks 17 on the shaft 16, wherein each disk 17 comprises an internal part that is individually slideably supported on the shaft 16 for radial movement with respect to the building drum 1. An external ring surrounding the internal part, is rotatably supported on the internal part, wherein the internal part has a recess the length of which exceeds the corresponding size of the shaft 16, wherein the recess has side walls that slidably engage onto the side walls of the shaft 16 for movement in a radial direction with respect to the building drum 1. The shaft 16 comprises a plurality of radial bores, one for each disc 17, a piston arranged in the internal part of each disc 17, which piston slidably engages into a respective radial bore of the shaft 16, wherein the shaft has ducts 18 that are connected to respective bores for supplying a pressure medium thereto from a pressure supplying device 22, so that each disc 17 is radially movable on the shaft 16 while operating the respective piston in the respective bore in the shaft 16. In that case the plurality of discs 17 comprises a first side wall disc group 19 for pressing the first side wall 6 against the building drum 1, a second side wall disc group 20 for pressing the second side wall 8 against the building drum 1, and an inner liner disc group 21 for pressing the inner liner 4 against the building drum 1.

The pressure supplying device 22 comprises a control device 23 for depending on the first side wall measuring signal (coming from the measuring device 12), the second side wall measuring signal (coming from the measuring device 13) and/or the inner liner measuring signal (coming from the measuring device 14) applying a quantity of pressure medium onto the disc group 19, 20, 21 in question. In that case the disc groups can be operated per group by a duct belonging to a group, as schematically shown in figure 9. In that case the bores of the discs belonging to one group as shown can be joined into a common chamber.

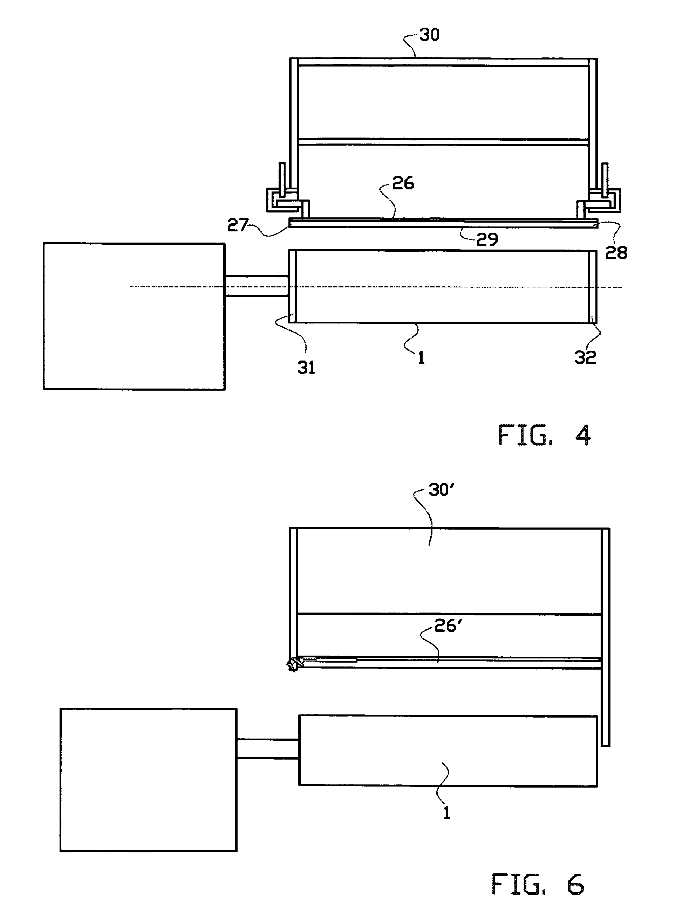

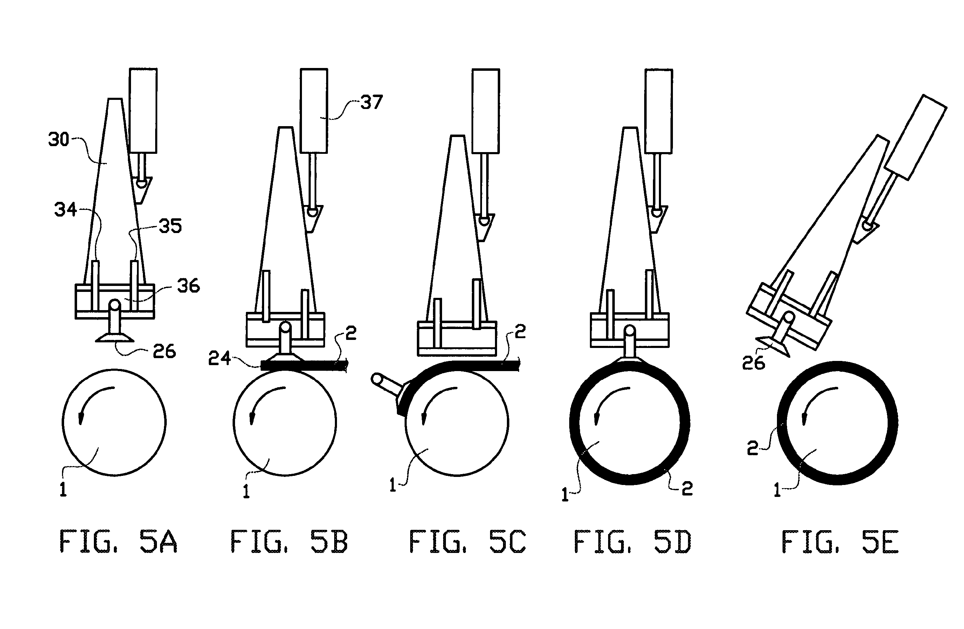

In figure 4 a schematic front view is shown of an embodiment of a retaining device having a clamping element holder and clamping element to be used in the inventive device, wherein figures 5A-5E show schematic side views of some positions of the clamping element according to figure 4 on the building drum during rotation of the building drum 1. As shown in figure 3 the pre-assembly 2 has a leading end 24 (figure 3) and a trailing end 25. The inventive device is provided with a first retaining device for during winding the pre-assembly 2 onto the building drum 1 retaining the leading end 24 on the building drum 1. In the embodiment shown in figures 4 and 5 the first retaining device comprises an elongated clamping element 26, which clamping element 26 at the extreme ends 27, 28 is provided with magnets for magnetic attachment to parts 31, 32 in question of the building drum 1, and between the extreme ends comprises a surface 29 of flexible material. Due to a clamping element holder 30 the clamping element 26 can be placed on the building drum 1 during rotation of the building drum and due to the magnets is detachably arranged on the building drum 1. The clamping element holder 30 is also adapted for during rotation of the building drum removing the clamping element 26 from the building drum 1. It will be clear that in an alternative embodiment the building drum is provided with magnets for detachably holding the clamping element.

In figure 5A the starting position is shown in which the clamping element 26 is held on the clamping element holder 30, and is confined between slidable stops 34, 35 closing off a slit 36 in which the clamping element 26 is slidably accommodated. After the leading end 24 of the pre-assembly 2 has been placed on the building drum 1, the clamping element 26 is moved towards the leading end 24 by means of a cylinder 37 until the clamping element 26 is clamped onto the building drum 1 by magnetic forces. The stop 34 is moved upwards (figure 5B) and at further rotation the clamping element 26 is taken along by the building drum 1 (figure 5C), wherein the leading end 24 remains correctly positioned. The stop 34 is moved downwards again and the stop 35 is moved upwards so that after a full rotation of the building drum 1 (figure 5D) the clamping element 26 is accommodated in the clamping element holder 30 again. The clamping element holder is swung in rotation direction of the building drum 1 (figure 5E) so that the clamping element 26 with relatively little force, and without adverse influence on the pre-assembly 2 wound on the building drum 1, is removed from the building drum 1. After that the clamping element holder 30 can be brought into the starting position again. It will be clear that within the scope of the invention other retaining devices can be used as well.

For instance the first retaining device may also be a vacuum device integrated in the building drum 1 for pulling the leading end against the building drum by means of a vacuum.

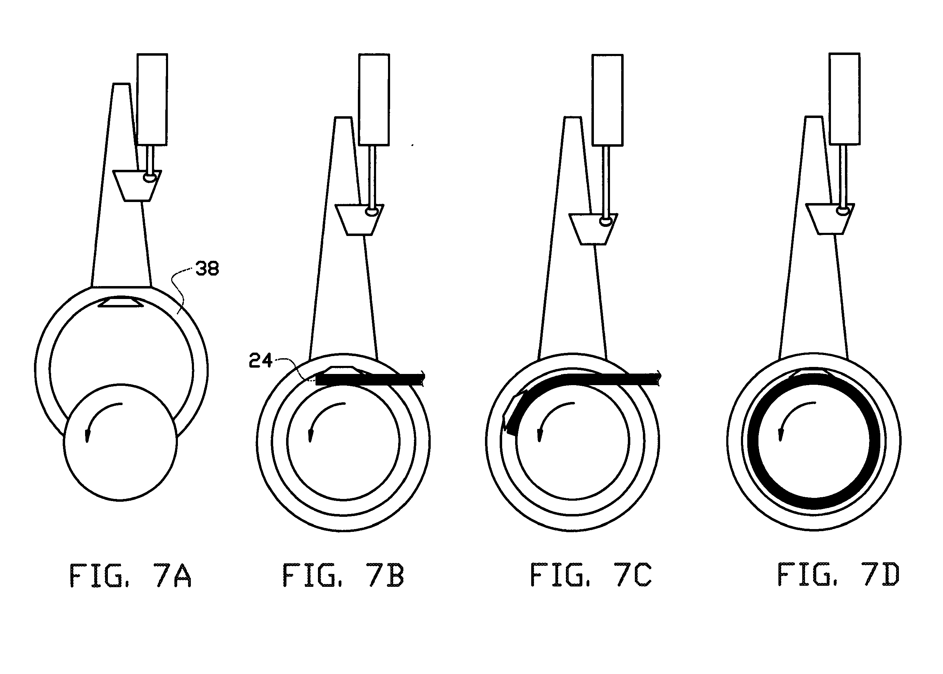

Another alternative for the first retaining device is shown in figures 6 and 7. In that case the clamping element 26' is rotatably attached to a part 38 of the clamping element holder 30'. All this is designed such (see figures 7A-7D) so as to have the clamping element 26' rotate synchronously with the building drum 1 when the pre-assembly is wound onto the building drum 1, wherein the clamping element 26' retains the leading end 24 on the building drum 1.

As shown in figure 2 the device is also provided with a second retaining device 39 for during winding the pre-assembly 2 onto the building drum 1 retaining (at least) the trailing end 25 on the supply conveyor 11. The second retaining device 39 in the embodiment shown is a vacuum device which via through-holes in the supply conveyor pulls at least the trailing end of the pre-assembly against the surface of the supply conveyor.

As is also shown in figure 2 the device is provided with a vacuum device 40 which is situated underneath at least a part of the supply conveyor 11 that is situated underneath the cutting device 10 and in conveyance direction up to some distance therefrom, wherein the vacuum device 40 is suitable for retaining the pre-assembly on the supply conveyor 11. As a result during and after cutting the pre-assembly is retained in the correct position on the supply conveyor. In the embodiment of the device shown in figure 2 the supply conveyor 11 comprises a first conveyor 11a which is placed underneath the cutting device 10, and a second conveyor 11b which is placed between the first conveyor 11a and the building drum 1. Said second conveyor 11 b makes it possible that the pre-assembly can be wound onto the building drum 1 independent of the supply of the inner liner and the side walls, wherein it is also possible that the building drum 1 remains rotating continuously. For correctly transferring the pre-assembly from the first conveyor 11 a to the second conveyor 11 b a further vacuum facility 41 may be arranged at the end of the first conveyor 11a.

The surface of the supply conveyor 11a, 11b is advantageously made of material adhering to the material of the pre-assembly so that the position of the material during conveying remains at least almost unchanged, it particularly prevents material from shrinking.

The above description is included to illustrate the operation of preferred embodiments of the invention and not to limit the scope of the invention. Starting from the above explanation many variations that fall within the spirit and scope of the present invention, particularly as defined in the attached claims, will be evident to an expert.

## Claims

1. Device for manufacturing a pre-assembly (2) for a tyre, which device is provided with:
a building drum (1) for receiving the pre-assembly (2),
an inner liner stock roll (3) for containing an inner liner (4),
a first side wall stock roll (5) for containing a first side wall (6) and a second side wall stock roll (7) for containing a second side wall (8),
a joining device (9) for joining the inner liner (4) and the side walls (6, 8) together into a pre-assembly (2), wherein in the pre-assembly (2) the first and second side walls (6, 8) are situated on either side of the inner liner (4), which joining device (9) is provided with a cutting device (10) for cutting the pre-assembly (2) to length and with a supply conveyor (11; 11 a, 11b) for conveying the cut pre-assembly (2) to the building drum (1), **characterised in that** the device is provided with a first side wall measuring device (12) for measuring the length of the first side wall (6) of the cut pre-assembly (2) and for giving a first side wall measuring signal indicative of the measured length of the first side wall, with a second side wall measuring device (13) for measuring the length of the second side wall (8) of the cut pre-assembly (2) and for giving a second side wall measuring signal indicative of the measured length of the second side wall, and with an inner liner measuring device (14) for measuring the length of the inner liner (4) of the cut pre-assembly and for giving an inner liner measuring signal indicative of the measured length of the inner liner, wherein the device furthermore comprises a correction device for correcting differences in length on the basis of the first side wall measuring signal, the second side wall measuring signal and/or the inner liner measuring signal.

2. Device according to claim 1, **characterised in that** the correction device is furthermore provided with a pressure roll (15) for pressing the cut pre-assembly (2) against the building drum (1), wherein the pressure roll (15) is provided with a non-rotatable shaft (16) extending in a longitudinal direction of the pressure roll (15), a plurality of uniformly spaced apart radial discs (17) on the shaft (16), wherein each disc comprises an internal part that is individually slidably supported on the shaft (16) for radial movement with respect to the building drum (1), and an external ring surrounding the internal part and rotatably supported on the internal part, wherein the internal part has a recess the length of which exceeds the corresponding size of the shaft (16), wherein the recess has side walls that slidably engage onto the side walls of the shaft (16) for movement in a radial direction with respect to the building drum (1), wherein the shaft (16) comprises a plurality of radial bores, one for each disc (17), a piston arranged in the internal part of each disc (17), which piston slidably engages into a respective radial bore of the shaft (16), wherein the shaft (16) has ducts (18) that are connected to respective bores for supplying a pressure medium thereto from a pressure supplying device (22) so that each disc (17) is radially movable on the shaft (16) while operating the respective piston in the respective bore in the shaft (16), wherein the plurality of discs (17) comprises a first side wall disc group (19) for pressing the first side wall (6) against the building drum (1), a second side wall disc group (20) for pressing the second side wall (8) against the building drum (1), and an inner liner disc group (21) for pressing the inner liner (4) against the building drum (1).

3. Device according to claim 2, **characterized in that** the pressure supplying device (22) contains a control device (23) for depending on the first side wall measuring signal, the second side wall measuring signal and/or the inner liner measuring signal applying a pressure in question onto the disc group (19, 20, 21) in question.

4. Device according to any one of the preceding claims or according to the preamble of claim 1, **characterised in that** the pre-assembly (2) has a leading end (24) and a trailing end (25), wherein the device is provided with a first retaining device for retaining the leading end (24) on the building drum (1) during winding the pre-assembly (2) onto the building drum (1).

5. Device according to claim 4, **characterised in that** the first retaining device comprises an elongated clamping element (26; 26'), which clamping element (26; 26') at the extreme ends (27, 28) is provided with magnets and between the extreme ends (27, 28) comprises a surface (29) of flexible material, which clamping element (26; 26') due to a clamping element holder (30, 30') during rotation of the building drum can be placed on the building drum (1), and due to the magnets is detachably arranged on the building drum (1), wherein the clamping element holder (30; 30') is also adapted for during rotation of the building drum removing the clamping element (26; 26') from the building drum (1).

6. Device according to claim 4, **characterised in that** the first retaining device is a vacuum device integrated in the building drum (1).

7. Device according to any one of the preceding claims or according to the preamble of claim 1, **characterised in that** the pre-assembly (2) has a leading end (24) and a trailing end (25), wherein the device is provided with a second retaining device (39) for retaining the trailing end (25) on the supply conveyor (11; 11 a, 11 b) during winding the pre-assembly (2) onto the building drum (1).

8. Device according to any one of the preceding claims, **characterised in that** the device is provided with a vacuum device (40) which is situated underneath at least the part of the supply conveyor (11; 11 b) situated underneath the cutting device (10) and in conveyance direction up to some distance therefrom, wherein the vacuum device (40) is suitable for retaining the pre-assembly (2) on the supply conveyor (11; 11b).

9. Device according to any one of the preceding claims, **characterised in that** the surface of the supply conveyor (11; 11 a, 11b) is made of material that adheres to the material of the pre-assembly (2).

10. Device according to any one of the preceding claims, **characterised in that** the supply conveyor comprises a first conveyor (11a) which is placed underneath the cutting device (10), and a second conveyor (11b) which is placed between the first conveyor (11a) and the building drum (1).

## Patentansprüche

1. Vorrichtung zur Herstellung eines Voraufbaus (2) für einen Reifen, wobei die Vorrichtung versehen ist mit:
einer Aufbautrommel (1) zur Aufnahme des Voraufbaus (2),
einer Innenschichtvorratsrolle (3) zur Aufnahme einer Innenschicht (4),
einer ersten Seitenwandvorratsrolle (5) zum Fassen einer ersten Seitenwand (6) und einer zweiter Seitenwandvorratsrolle (7) zum Fassen einer zweiten Seitenwand (8),
einer Verbindungsvorrichtung (9) zum Verbinden der Innenschicht (4) und der Seitenwände (6, 8) miteinander zu einem Voraufbau (2), wobei sich im Voraufbau (2) die ersten und
zweiten Seitenwände (6, 8) auf jeder Seite der Innenschicht (4) befinden, wobei die Verbindungsvorrichtung (9) mit einer Schneidevorrichtung (10) zum Schneiden des Voraufbaus (2) auf Länge und mit einem Zufuhrförderer (11; 11a, 11b) zum Befördern des zugeschnittenen Voraufbaus (2) zur Aufbautrommel (1) versehen ist, **dadurch gekennzeichnet, dass** die Vorrichtung versehen ist mit einer ersten Seitenwandmessvorrichtung (12) zum Messen der Länge der ersten Seitenwand (6) des zugeschnittenen Voraufbaus (2) und zum Abgeben eines ersten Seitenwandmesssignals, das die gemessene Länge der ersten Seitenwand anzeigt, einer zweiten Seitenwandmessvorrichtung (13) zum Messen der Länge der zweiten Seitenwand (8) des zugeschnittenen Voraufbaus (2) und zum Abgeben eines zweiten Seitenwandmesssignals, das die gemessene Länge der zweiten Seitenwand anzeigt, und einer Innenschichtmessvorrichtung (14) zum Messen der Länge der Innenschicht (4) des zugeschnittenen Voraufbaus und zum Abgeben eines Innenschichtmesssignals, das die gemessene Länge der Innenschicht anzeigt, wobei die Vorrichtung ferner eine Korrekturvorrichtung zum Korrigieren von Längenunterschieden auf der Grundlage des ersten Seitenwandmesssignals, des zweiten Seitenwandmesssignals und/oder des Innenschichtmesssignals aufweist.

2. Vorrichtung nach Anspruch 1, **dadurch gekennzeichnet, dass** die Korrekturvorrichtung ferner mit einer Andruckrolle (15) zum Drücken des zugeschnittenen Voraufbaus (2) gegen die Aufbautrommel (1) versehen ist, wobei die Andruckrolle (15) versehen ist mit einer nicht drehbaren Welle (16), die sich in eine Längsrichtung der Andruckrolle (15) erstreckt, mehreren einheitlich beabstandeten radialen Scheiben (17) auf der Welle (16), wobei jede Scheibe ein Innenteil aufweist, das zur radialen Bewegung bezüglich der Aufbautrommel (1) einzeln verschiebbar auf der Welle (16) gehalten wird, und einem Außenring, der das Innenteil umgibt und drehbar auf dem Innenteil gehalten wird, wobei das Innenteil eine Aussparung umfasst, dessen Länge die entsprechende Größe der Welle (16) überschreitet, wobei die Aussparung Seitenwände umfasst, die für eine Bewegung in eine radiale Richtung bezüglich der Aufbautrommel (1) verschiebbar an die Seitenwände der Welle (16) angreifen, wobei die Welle (16) mehrere radiale Bohrungen, eine für jede Scheibe (17), und einen Kolben umfasst, der im Innenteil jeder Scheibe (17) angeordnet ist, wobei der Kolben verschiebbar in eine jeweilige radiale Bohrung der Welle (16) eingreift, wobei die Welle (16) Kanäle (18) umfasst, die mit jeweiligen Bohrungen zum Zuführen eines Druckmediums dorthin aus einer Druckzufuhrvorrichtung (22) verbunden sind, so dass jede Scheibe (17) radial auf der Welle (16) beweglich ist, während der jeweilige Kolben in der jeweiligen Bohrung in der Welle (16) betrieben wird, wobei die mehreren Scheiben (17) eine erste Seitenwandscheibengruppe (19) zum Drücken der ersten Seitenwand (6) gegen die Aufbautrommel (1), eine zweite Seitenwandscheibengruppe (20) zum Drücken der zweiten Seitenwand (8) gegen die Aufbautrommel (1) und eine Innenschichtscheibengruppe (21) zum Drücken der Innenschicht (4) gegen die Aufbautrommel (1) umfasst.

3. Vorrichtung nach Anspruch 2, **dadurch gekennzeichnet, dass** die Druckzufuhrvorrichtung (22) eine Steuervorrichtung (23) umfasst, um abhängig vom ersten Seitenwandmesssignal, vom zweiten Seitenwandmesssignal und/oder vom Innenschichtmesssignal einen jeweiligen Druck auf die jeweilige Scheibengruppe (19, 20, 21) auszuüben.

4. Vorrichtung nach einem der vorhergehenden Ansprüche oder gemäß des Oberbegriffs des Anspruchs 1, **dadurch gekennzeichnet, dass** der Voraufbau (2) ein Vorderende (24) und ein Hinterende (25) umfasst, wobei die Vorrichtung mit einer ersten Haltevorrichtung zum Halten des Vorderendes (24) auf der Aufbautrommel (1) während des Wickelns des Voraufbaus (2) auf die Aufbautrommel (1) versehen ist.

5. Vorrichtung nach Anspruch 4, **dadurch gekennzeichnet, dass** die erste Haltevorrichtung ein längliches Klemmelement (26; 26') umfasst, wobei das Klemmelement (26; 26') an den äußersten Enden (27, 28) mit Magneten versehen ist und zwischen den äußersten Enden (27, 28) eine Oberfläche (29) aus einem flexiblen Material umfasst, wobei das Klemmelement (26; 26') infolge eines Klemmelementhalters (30, 30') während der Rotation der Aufbautrommel an der Aufbautrommel (1) angeordnet werden kann und infolge der Magnete lösbar an der Aufbautrommel (1) angeordnet ist, wobei der Klemmelementhalter (30; 30') außerdem während der Rotation der Aufbautrommel zum Entfernen des Klemmelements (26; 26') von der Aufbautrommel (1) eingerichtet ist.

6. Vorrichtung nach Anspruch 4, **dadurch gekennzeichnet, dass** die erste Haltevorrichtung eine Vakuumvorrichtung ist, die in die Aufbautrommel (1) integriert ist.

7. Vorrichtung nach einem der vorhergehenden Ansprüche oder gemäß des Oberbegriffs des Anspruchs 1, **dadurch gekennzeichnet, dass** der Voraufbau (2) ein Vorderende (24) und ein Hinterende (25) umfasst, wobei die Vorrichtung mit einer zweiten Haltevorrichtung (39) zum Halten des Hinterendes (25) am Zufuhrförderer (11; 11a, 11b) während des Wickelns des Voraufbaus (2) auf die Aufbautrommel (1) versehen ist.

8. Vorrichtung nach einem der vorhergehenden Ansprüche, **dadurch gekennzeichnet, dass** die Vorrichtung mit einer Vakuumvorrichtung (40) versehen ist, die sich mindestens unter dem Teil des Zufuhrförderers (11; 11b) befindet, der sich unter der Schneidevorrichtung (10) und bis in einen gewissen Abstand in die Förderrichtung davon befindet, wobei die Vakuumvorrichtung (40) zum Halten des Voraufbau (2) auf dem Zufuhrförderer (11; 11b) geeignet ist.

9. Vorrichtung nach einem der vorhergehenden Ansprüche, **dadurch gekennzeichnet, dass** die Oberfläche des Zufuhrförderers (11; 11a, 11b) aus einem Material besteht, das am Material des Voraufbaus (2) haftet.

10. Vorrichtung nach einem der vorhergehenden Ansprüche, **dadurch gekennzeichnet, dass** der Zufuhrförderer einen ersten Förderer (11a), der unter der Schneidevorrichtung (10) angeordnet ist, und einen zweiten Förderer (11b) umfasst, der zwischen dem ersten Förderer (11a) und der Aufbautrommel (1) angeordnet ist.

## Revendications

1. Dispositif de fabrication d'un pré-assemblage (2) pour un pneu, lequel dispositif est doté :
d'un tambour de confection (1) pour recevoir le pré-assemblage (2),
d'un rouleau de réserve de calandrage intérieur (3) pour contenir un calandrage intérieur (4),
d'un premier rouleau de réserve de flanc (5) pour contenir un premier flanc (6) et d'un second rouleau de réserve de flanc (7) pour contenir un second flanc (8),
d'un dispositif de liaison (9) pour relier le calandrage intérieur (4) et les flancs (6, 8) ensemble dans un pré-assemblage (2), dans lequel dans le pré-assemblage (2) les premier et second flancs (6, 8) sont situés sur l'un ou l'autre côté du calandrage intérieur (4), lequel dispositif de liaison (9) est doté d'un dispositif de découpe (10) pour découper le pré-assemblage (2) dans le sens de la longueur et d'un convoyeur d'approvisionnement (11 ; 11a ; 11b) pour acheminer le pré-assemblage découpé (2) vers le tambour de confection (1), **caractérisé en ce que** le dispositif est doté d'un premier dispositif de mesure de flanc (12) pour mesurer la longueur du premier flanc (6) du pré-assemblage découpé (2) et pour donner un premier signal de mesure de flanc indiquant la longueur mesurée du premier flanc, d'un second dispositif de mesure de flanc (13) pour mesurer la longueur du second flanc (8) du pré-assemblage découpé (2) et pour donner un second signal de mesure de flanc indiquant la longueur mesurée du second flanc, et d'un dispositif de mesure de calandrage intérieur (14) pour mesurer la longueur du calandrage intérieur (4) du pré-assemblage découpé et pour donner un signal de mesure de calandrage intérieur indiquant la longueur mesurée du calandrage intérieur, dans lequel le dispositif comprend en outre un dispositif de correction permettant de corriger les différences de longueurs d'après le premier signal de mesure de flanc, le second signal de mesure de flanc et/ou le signal de mesure de calandrage intérieur.

2. Dispositif selon la revendication 1, **caractérisé en ce que** le dispositif de correction est en outre doté d'un rouleau de pression (15) pour appuyer le pré-assemblage découpé (2) contre le tambour de confection (1), dans lequel le rouleau de pression (15) est doté d'un arbre ne pouvant pas être mis en rotation (16) s'étendant dans une direction longitudinale du rouleau de pression (15), une pluralité de disques radiaux espacés les uns des autres (17) sur l'arbre (16), dans lequel chaque disque comprend une partie interne qui est supportée de façon coulissante individuellement sur l'arbre (16) pour un mouvement radial par rapport au tambour de confection (1), et un anneau externe entourant la partie interne et supporté de façon rotative sur la partie interne, dans lequel la partie interne comporte un évidemment dont la longueur dépasse la taille correspondante de l'arbre (16), dans lequel l'évidemment comporte des parois latérales qui se mettent en prise de façon coulissante sur les parois latérales de l'arbre (16) pour un mouvement dans une direction radiale par rapport au tambour de confection (1), dans lequel l'arbre (16) comprend une pluralité d'alésages radiaux, un pour chaque disque (17), un piston agencé dans la partie interne de chaque disque (17), lequel piston se met en prise de façon coulissante dans un alésage radial respectif (16), dans lequel l'arbre (16) comporte des conduits (18) qui sont raccordés à des alésages respectifs pour lui délivrer un milieu sous pression en provenance d'un dispositif de réserve de pression (22) de sorte que chaque disque (17) est mobile de façon radiale sur l'arbre (16) pendant le fonctionnement du piston respectif dans l'alésage respectif de l'arbre (16), dans lequel la pluralité de disques (17) comprend un premier groupe de disques de flanc (19) pour appuyer le premier flanc (6) contre le tambour de confection (1), un second groupe de disques de flanc (20) pour appuyer le second flanc (8) contre le tambour de confection (1), et un groupe de disque de calandrage intérieur (21) pour appuyer le calandrage intérieur (4) contre le tambour de confection (1).

3. Dispositif selon la revendication 2, **caractérisé en ce que** le dispositif de réserve de pression (22) contient un dispositif de commande (23) destiné à dépendre du premier signal de mesure de flanc, du second signal de mesure de flanc et/ou du signal de mesure de calandrage intérieur, pour appliquer une pression en question sur le groupe de disques (19, 20, 21) en question.

4. Dispositif selon l'une quelconque des revendications précédentes ou selon le préambule de la revendication 1, **caractérisé en ce que** le pré-assemblage (2) comporte une extrémité avant (24) et une extrémité arrière (25), dans lequel le dispositif est doté d'un premier dispositif de retenue pour retenir l'extrémité avant (24) sur le tambour de confection (1) pendant l'enroulement du pré-assemblage (2) sur le tambour de confection (1).

5. Dispositif selon la revendication 4, **caractérisé en ce que** le premier dispositif de retenue comprend un élément de serrage allongé (26 ; 26'), lequel élément de serrage (26 ; 26') au niveau des extrémités les plus éloignées (27, 28) est doté d'aimants et entre les extrémités les plus éloignées (27, 28) comprend une surface (29) de matériau flexible, lequel élément de serrage (26 ; 26') en raison d'un support d'élément de serrage (30, 30') pendant la rotation du tambour de confection peut être placé sur le tambour de confection (1), et en raison des aimants est agencé de façon amovible sur le tambour de confection (1), dans lequel le support d'élément de serrage (30 ; 30') est également adapté, pendant la rotation du tambour de confection retirant l'élément de serrage (26 ; 26') du tambour de confection (1).

6. Dispositif selon la revendication 4, **caractérisé en ce que** le premier dispositif de retenue est un dispositif sous vide intégré dans le tambour de confection (1).

7. Dispositif selon l'une quelconque des revendications précédentes ou selon le préambule de la revendication 1, **caractérisé en ce que** le pré-assemblage (2) comporte une extrémité avant (24) et une extrémité arrière (25), dans lequel le dispositif est doté d'un second dispositif de retenue (39) pour retenir l'extrémité arrière (25) sur le convoyeur d'approvisionnement (11 ; 11a ; 11b) pendant l'enroulement du pré-assemblage (2) sur le tambour de confection (1).

8. Dispositif selon l'une quelconque des revendications précédentes, **caractérisé en ce que** le dispositif est doté d'un dispositif sous vide (40) qui est situé sous au moins la partie du convoyeur d'approvisionnement (11, 11b) situé sous le dispositif de découpe (10) et dans une direction d'acheminement jusqu'à une certaine distance de ce dernier, dans lequel le dispositif sous vide (40) est adapté pour retenir le pré-assemblage (2) sur le convoyeur d'approvisionnement (11 ; 11b).

9. Dispositif selon l'une quelconque des revendications précédentes, **caractérisé en ce que** la surface du convoyeur d'approvisionnement (11 ; 11a, 11b) est constituée d'un matériau qui adhère au matériau du pré-assemblage (2).

10. Dispositif selon l'une quelconque des revendications précédentes, **caractérisé en ce que** le convoyeur d'approvisionnement comprend un premier convoyeur (11a) qui est placé sous le dispositif de découpe (10), et un second convoyeur (11b) qui est placé entre le premier convoyeur (11a) et le tambour de confection (1).
